# EUROPÄISCHE PATENTSCHRIFT

(11) **EP 1 629 946 B1**
(45) Veröffentlichungstag und Bekanntmachung des Hinweises auf die Patenterteilung: **07.10.2015**
(21) Anmeldenummer: 05107815.2
(22) Anmeldetag: 25.08.2005
(51) Int. Cl.: B25B 27/00, F16L 1/10, F16L 23/00, B25B 27/16

(54) **Montagehilfe für eine Flanschverbindung**
Mounting aid for a flanged connection
Dispositif pour faciliter le montage d'un raccord à brides

(30) Priorität: 25.08.2004 DE 102004041360; 19.01.2005 DE 102005002556
(43) Veröffentlichungstag der Anmeldung: 01.03.2006
(73) Patentinhaber: Kurt Grützmann Feinmechanic GmbH, 23858 Reinfeld (DE)
(72) Erfinder: Beissner, Hans-Wilhelm, 21723, Hollern (DE); Planthaber, Niko, 23858, Heidekamp (DE)
(74) Vertreter: Leonhard, Frank Reimund

(56) Entgegenhaltungen:
- WO-A-98/05893
- DE-A1- 3 245 674
- US-A- 3 015 883
- US-A- 3 777 348

## Beschreibung

Die Erfindung betrifft eine Montagehilfe für das Verbinden von zwei Flanschenden von beispielsweise Rohren. Es ist in der Praxis oft nicht leicht, diese Flanschenden, z.B. von zwei Rohren, insbesondere bei höheren Gewichten und/oder schwierigen Umfeld-Verhältnissen axial exakt auf einander auszurichten, um die Verbindungselemente in die am Flansch vorgesehenen Verschraubungsöffnungen einsetzen zu können. Auch kann es unter diesen Verhältnissen schwierig sein, eine defekte Flanschdichtung nach Lösen der Verbindungselemente auszuwechseln, da die Flansche einander zu nahe liegen. Werden die Flanschenden nach dem Einsetzen eines neuen Dichtungselementes wieder miteinander verspannt, ohne dass sie genau aufeinander ausgerichtet sind, ist die Gefahr groß, dass die neue Dichtung dabei beschädigt wird. Eine Vorrichtung zum Montieren entsprechend dem Oberbegriff des Anspruchs 1 ist aus der DE 3245674 A bekannt.

Es ist Aufgabe der Erfindung, eine einfache und leicht anzubringende und zu bedienende, robuste Montagehilfe vorzusehen, die überall und unter allen Verhältnissen eingesetzt werden kann, um die aufgezeigten Schwierigkeiten zu meistern.

Diese Aufgabe wird gemäß Anspruch 1 gelöst.

Der Rahmen kann sehr stabil ausgebildet werden, so dass er in der Lage ist alle bei der Ausrichtung der Flanschenden für die Montage auftretenden Kräfte sicher auf das Flanschende abzusetzen, mit dem er auf einfache Weise, z.B. nach Anspruch 1 in Verbindung mit Anspruch 7, oder nach Anspruch 1 in Verbindung mit Anspruch 5, sicher verspannt ist.

Da der Rahmen gegenüber dem Flanschende, an dem er festgelegt ist, in seiner relativen Stellung genau einstellbar ist, wird auch eine genaue axiale Ausrichtung der beiden Flanschenden erreicht.

Zur einfachen und sicheren Ankupplung des Rahmens an dem einen Flanschende ist die Ausbildung nach Anspruch 3 sehr vorteilhaft, wobei bei Benutzung auch von Anspruch 4 und/oder Anspruch 6 die Montagehilfe leicht an unterschiedliche Größen oder Ausbildungen der Flanschenden angepasst werden kann.

Weitere vorteilhafte Ausbildungen sind Gegenstand der weiteren Unteransprüche.

Die Erfindung wird nachfolgend an Hand schematischer Zeichnungen an mehreren Ausführungsbeispielen näher erläutert.
- Figur 1: zeigt eine Montagehilfe in Arbeitsstellung mit zwei Flanschenden in perspektivischer Darstellung.
- Figur 2: zeigt die Montagehilfe mit Blickrichtung in Verstellrichtung.
- Figur 3: zeigt die Montagehilfe mit Blick in Richtung der Achse der (nicht dargestellten) Flanschverbindung.
- Figur 4: zeigt die Montagehilfe in Seitenansicht.
- Figur 5: zeigt in vereinfachter Darstellung einen Schnitt durch einen Rohrflansch im Bereich einer Flanschbefestigungsbohrung mit im Eingriff befindlichem Zapfen in einer abgewandelten Ausführung der Montagehilfe.
- Figur 6: eine abgewandelte Form der zur Montagehilfe gehörenden armförmigen Halter.
- Figur 7: zeigt eine abgewandelte Ausführung eines der Abstandshalter der Montagehilfe.
- Figur 8: zeigt die Anordnung nach Fig. 7 in einer um 90° gedrehten Blickrichtung.

Eine Montagehilfe 3 weist einen Rahmen auf, der aus zwei im gegenseitigen Abstand angeordneten parallelen Führungsstangen oder -schienen 4 und wenigstens zwei diese verbindenden Abstandshaltern 5 und 13 besteht. Der Abstandshalter 5 im oberen Bereich des Rahmens liegt jeweils auf Schultern der Führungselemente 4 auf, die zur leichteren Handhabung Griffe 8 aufweisen. Der andere Abstandshalter 13 ist an den Führungselementen 4 verschieblich geführt und in jeder Schiebestellung durch Feststellelement 13a fixierbar.

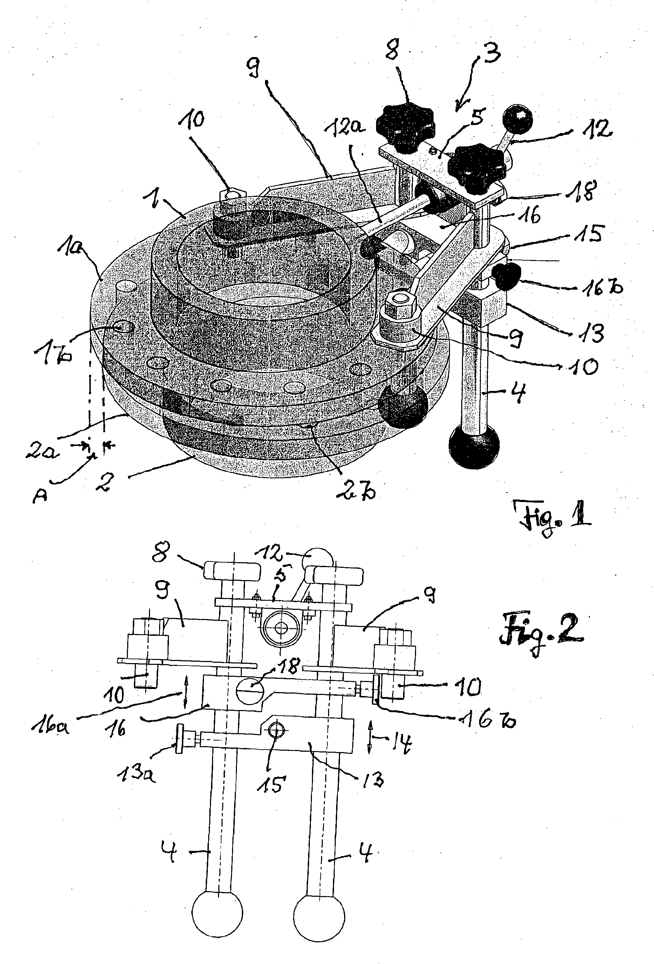

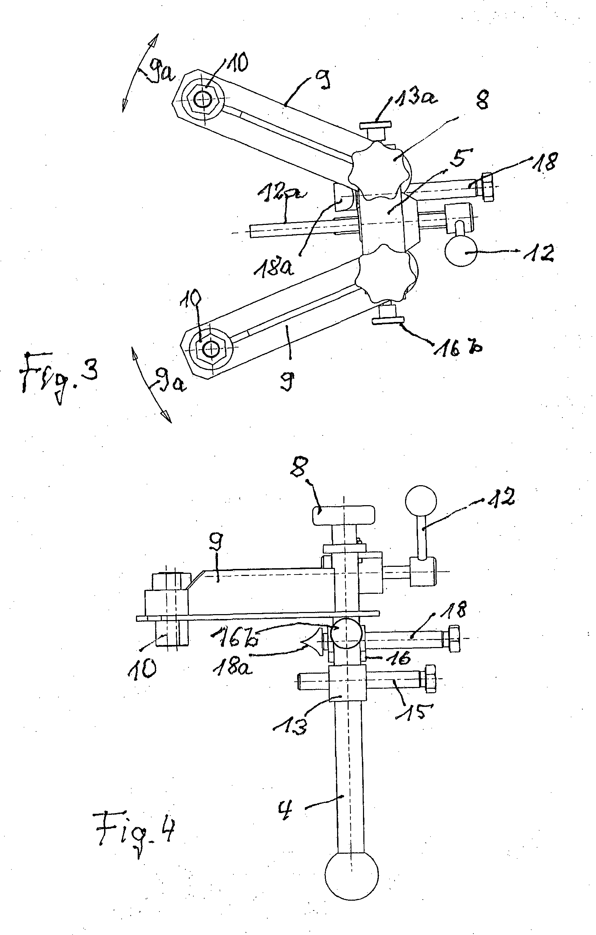

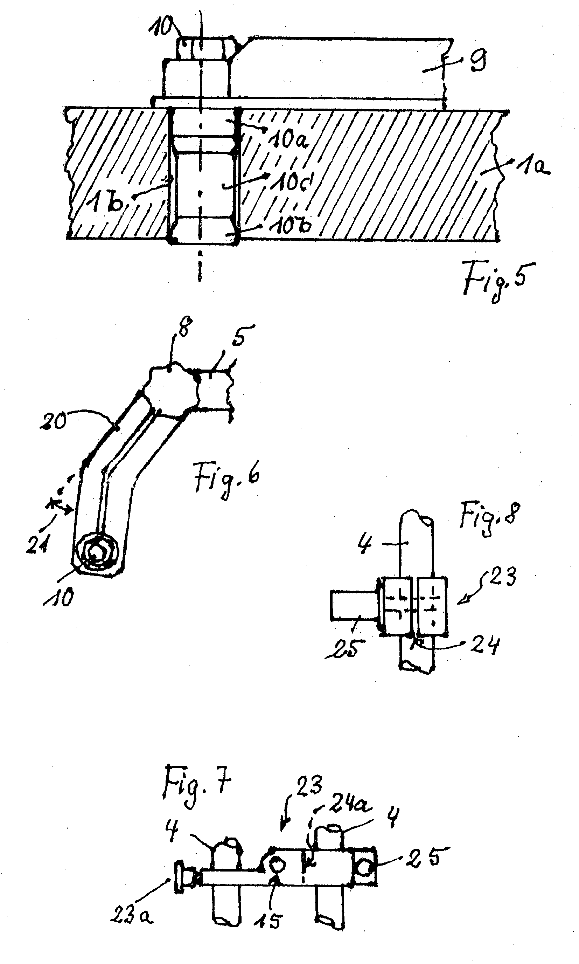

Die Verbindung zwischen dem Rahmen und einem der Rohrflansche, z.B. Flansch 1, erfolgt bevorzugt über ein Gelenkviereck. Dazu ist unterhalb des oberen Abstandhalters 5 an jedem der Führungselemente 4 ein armförmiger Halter 9 schwenkbar gelagert. Bei dem Ausführungsbeispiel nach Figur 1 bis 4 sind die beiden Halter geradlinig ausgebildet. Da dies in der Anwendung leicht dazu führen kann, dass bei montierter Montagehilfe der freie Zugang zu einem oder mehreren der Flanschbohrungen 1b durch die Arme 9 behindert ist, können die Arme, wie der Arm 20 in Figur 6, mit ihren freien Enden 10 auf einander zu abgewinkelt oder bogenförmig ausgebildet sein, wozu ein Abwinklung von etwa 30° meist ausreichend ist.

Es können auch Halter verschiedener Länge auswechselbar an den Führungselementen angebracht werden, um unterschiedlichen Größen oder Formen der Flanschenden Rechnung zu tragen. Jeder Halter 9 weist an seinem freien Ende einen Zapfen 10 zum einfachen Eingreifen in jeweils eine der Verbindungsöffnungen 1b, 2b der Flansche 1a, 2a der Flanschenden 1 und 2 (Figur 1) auf. Auch die Zapfen können zur Anpassung an die jeweilige Weite der Öffnungen austauschbar angebracht sein.

An dem obersten Abstandshalter 5 des Rahmens ist bei der Ausführungsform nach Figur 1 bis 4 - vorzugsweise mittig zwischen den Führungselementen 4 - eine Spannvorrichtung mit Spannhebel 12 und durch diesen betätigbares Spannelement 12a angeordnet. Der Spannhebel kann in seiner Achsrichtung durchschiebbar an dem Spannelement angebracht sein. Da der Rahmen mit Hilfe der Halter 9 gegenüber der Achse des betreffenden Flanschendes 1 mittig ausgerichtet werden kann, lässt er sich mit Hilfe der Spannvorrichtung, dessen Spannelement 12a unterhalb des zugehörigen Flansches 1a an dem Rohrende 1 ansetzt, sicher an dem Flanschende 1 verspannen.

Die Spannvorrichtung kann entfallen, wenn die zum Eingreifen in eine Flanschbefestigungsbohrung 1b vorgesehenen Zapfen 10 gemäß Figur 5 über ihre axiale Länge im Durchmesser variieren: An ihren axialen Endbereichen 10a und 10b sind sie der lichten Weite der Bohrung 1b angepasst, in ihrem mittleren Bereich 10c jedoch demgegenüber etwas im Durchmesser eingezogen. Hierdurch verspannen sich die Bolzen in ihren zugehörigen Bohrungen fest und sorgen für eine zuverlässige Verbindung und Verspannung zwischen dem Rahmen und dem betreffenden Flanschende.

In Fig. 1 ist erkennbar, dass das Flanschende 2 gegenüber dem Flanschende 1 um eine Länge "A" axial versetzt ist. Nach dem Anbringen und Verspannen des Rahmens an dem Flanschende 1 kann der Abstandshalter 13 am Rahmen auf die Höhe des Flansches 2a des anderen Flanschendes eingestellt werden, um dieses mit Hilfe des Verstellelementes 15 in genaue axiale Fluchtung mit dem Flanschende 1 zu drücken, so dass die nicht dargestellten Verbindungselemente in die jeweils in Fluchtung stehenden Öffnungen 1b und 2b eingeführt und fest angezogen werden können, bevor die Montagehilfe 3 gelöst wird. Durch die exakte axiale Ausrichtung wird gewährleistet, dass dabei eine neu eingelegte Dichtung nicht beschädigt wird.

Mit der gleichen Montagehilfe 3 lässt sich auch das Auswechseln von beschädigten Flanschdichtungen wesentlich erleichtern. Dazu wird die Vorrichtung in der zuvor beschriebenen Weise montiert und verspannt. An dem Rahmen ist ein zweiter, an den Führungselementen 4 verschieblicher und feststellbarer Abstandshalter 16, 16b vorgesehen, an dem ein senkrecht zur Ebene des Rahmens verstellbares Spreizelement 18 angeordnet ist, das an seinem freien Ende einen etwa keilförmigen Spreizkopf 18a aufweist. Nach Ausrichten des Abstandhalters 16 auf die Trennebene zwischen den beiden Flanschen 1a und 2a lässt sich der Spreizkopf 18a zwischen die beiden Flansche drücken, so dass diese auseinander gedrängt werden. Damit wird das Dichtelement leicht zugänglich und kann ohne Probleme entnommen und durch ein neues Element ersetzt werden, welches leicht und in genauer Ausrichtung eingelegt werden kann.

Alle bei den beschriebenen Vorgängen auftretenden - oft erheblichen - Kräfte werden durch den stabilen Rahmen und seine feste Verklemmung an dem einen Flanschende sicher auf dieses abgesetzt. Um diese Kräfte kontrollieren und messen zu können, kann gemäß den Figuren 7 und 8 einer der die Führungselemente 4 verbindenden Halter 23 im Bereich des einen Führungselementes 4 in einer parallel zu oder zusammenfallend mit der Längsachse des Führungselementes 4 verlaufenden Ebene geschlitzt sein. Der Schlitz geht vom Ende des Halters 23 bis über die abgekehrte Seite des Führungselementes hinaus (siehe gestrichelte Linie 24).

Der Halter 23 selbst ist aus federndem Material, z.B. Stahl, hergestellt, so dass bei auftretenden Kräften am Rahmen diese über das Führungselement 4 in den geschlitzten Bereich des Halters 23 geleitet werden und den Schlitz 24 aufweiten. Diese Aufweitung kann gemessen und durch ein geeignetes Instrument 25 zur Anzeige gebracht werden.

## Patentansprüche

1. **Vorrichtung zum Montieren** einer Flanschverbindung einer Rohrleitung, mit einem Rahmen,
(i) mit zwei parallel zueinander angeordneten Führungsstangen oder -schienen als Führungen (4), die durch wenigstens zwei Abstandshalter (5,13) in einem Abstand gehalten sind, von denen zumindest einer (13) auf den Führungen verschieblich geführt und in jeder Schiebestellung feststellbar (13a) ist;
(ii) wobei der Rahmen mit einem ersten Flanschende (1, 1a; 2,2a) fest verspannbar und gegenüber diesem justierbar ist; **dadurch gekennzeichnet, daß**
(iii) einer der Abstandshalter ein auf das zweite Flanschende (2,2a) einstellbares Verstellelement (15) aufweist, zum Verschieben dieses Flanschendes senkrecht zu dessen Achse bis in eine axiale Fluchtung mit dem ersten Flanschende (1,1a).

2. Montagehilfe nach Anspruch 1, **dadurch gekennzeichnet daß**, an den Führungselementen (4) des Rahmens zwei armförmige Halter (9) schwenkbar gelagert sind, an deren Enden Zapfen (10) von entsprechendem Durchmesser zum Eingreifen in entsprechende Flansch-Befestigungsbohrungen (1b,2b angeordnet sind.

3. Montagehilfe nach Anspruch 2, **dadurch gekennzeichnet daß**, die armförmigen Halter (9) aufeinander zu abgewinkelt oder abgebogen sind.

4. Montagehilfe nach Anspruch 2, **dadurch gekennzeichnet daß**, Zapfen (10) von unterschiedlichem Durchmesser austauschbar an den Enden der Halter (9) anbringbar sind.

5. Montagehilfe nach einem der Ansprüche 1 bis 4, **dadurch gekennzeichnet daß**, die zum Eingreifen in eine Flansch-Befestigungs-Bohrung (1b) vorgesehenen Zapfen (10) jeweils in dem mittleren Bereich (10c) ihrer axialen Länge einen verringerten Durchmesser aufweisen.

6. Montagehilfe nach einem der Ansprüche 2 bis 5, **dadurch gekennzeichnet, daß** Halter (9) unterschiedlicher Länge austauschbar an den Führungselementen (4) schwenkbar anbringbar sind oder angebracht sind.

7. Montagehilfe nach Anspruch 1, **dadurch gekennzeichnet, daß** an einem der Abstandshalter (5) der beiden Führungselemente (4) ein senkrecht zur Rahmen-Ebene und mittig zwischen den Führungselementen (4) angeordnetes Spannelement (12a) zum Angreifen und Verklemmen an der Rohrleitung (1) des über Halter (9) und Zapfen (10) an den Rahmen gekoppelten Flanschendes (1a) vorgesehen ist.

8. Montagehilfe nach Anspruch 7, **dadurch gekennzeichnet, daß** das Spannelement als Gewindespindel (12a) einer mittels Hand betätigbaren Schnellspannvorrichtung (12) ausgebildet ist.

9. Montagehilfe nach einem der voranstehenden Ansprüche, **dadurch gekennzeichnet, daß** an einem der am Rahmen verschieblichen und feststellbaren Abstandshalter (16) ein weiteres Verstellelement (18) vorgesehen ist, das an seinem Ende einen keilförmigen Abschnitt (18a) zum axialen auseinanderdrängen der beiden Flanschenden (1,2) aufweist.

10. Montagehilfe nach einem der voranstehenden Ansprüche, **dadurch gekennzeichnet, daß** einer der Halter (23) im Bereich eines der beiden Führungselemente (4) bis zu seinem zugehörigen Ende hin einen - parallel zur Achse der Führungsstange (4) liegenden - Schlitz (24) aufweist, der in Abhängigkeit von den vom Rahmen aufzunehmenden Kräften elastisch verformbar ist, und dass diesem Bereich des Halters (23) ein entsprechendes Mess-/Anzeigelement (25) zugeordnet ist.

11. Montagehilfe nach Anspruch 5, der Durchmesser **dadurch gekennzeichnet, daß** in den beiden Endbereichen (10a,10b) einer lichten Weite der Flansch-Befestigungs-Bohrung angepasst ist.

12. Verfahren der Montage einer Flanschverbindung aus zwei Flanschenden einer Rohrleitung, mit einem Rahmen, wobei
(i) zwei parallel zueinander angeordnete Führungsstangen oder -schienen (4) durch wenigstens zwei Abstandshalter (5,13;23.) in einem Abstand gehalten werden, von denen wenigstens einer (13;23) auf den Führungsstangen verschoben wird und in einer Schiebestellung festgestellt wird (13a);
(ii) wobei der Rahmen mit einem ersten Flanschende (1,1a; 2,2a) über ein Gelenkviereck (4,9;10) justiert wird und verspannt wird; **dadurch gekennzeichnet, daß**
(iii) einer der Abstandshalter (13;23) mit einem auf das zweite Flanschende (2,2a) einstellbaren Verstellelement (15) versehen ist und das Flanschende senkrecht zu seiner Achse bis in eine axiale Fluchtung mit dem ersten Flanschende (1,1a) verschoben wird.

## Claims

1. **A device for mounting** a flange connection of a pipe, including a frame,
(i) including two guide rods or rails, as guides (4), arranged in parallel, which are held at a distance by at least two spacers (5, 13), at least one (13) of which is slidably guided on the guides and can be fixed in any sliding position (13a);
(ii) wherein the frame can be firmly clamped and adjusted with respect to a first flange end (1,1a; 2, 2a);
**characterized in that**
(iii) one of the spacers comprises an adjustment element (15) adjustable to the second flange end (2, 2a) for displacing this flange end perpendicularly to its axis until it is axially aligned with the first flange end (1, 1a).

2. Mounting aid according to claim 1, **characterized in that** two arm-shaped holders (9) are pivotally mounted to the guide elements (4) of the frame, at the ends of which holders pins (10) of corresponding diameter are arranged for engaging corresponding flange-mounting holes (1b, 2b).

3. Mounting aid according to claim 2, **characterized in that** the arm-shaped holders (9) are angled or bent towards each other.

4. Mounting aid according to claim 2, **characterized in that** pins (10) of various diameter can be exchangeably fitted to the ends of the holders (9).

5. Mounting aid according to any one of claims 1 to 4, **characterized in that** the pins (10) intended for engaging a flange-mounting hole (1b) each have a reduced diameter in the central area (10c) of their axial lengths.

6. Mounting aid according to any one of claims 2 to 5, **characterized in that** holders (9) of various lengths can be or are exchangeably fitted to the guiding elements (4) in a pivotable manner.

7. Mounting aid according to claim 1, **characterized in that** a clamping element (12a), which is arranged perpendicularly to the frame plane and centrally between the guiding elements (4), is provided at one of the spacers (5) of the two guiding elements (4) for engaging and clamping, at the pipe (1), the flange end (1a) coupled to the frame via the holders (9) and pins (10).

8. Mounting aid according to claim 7, **characterized in that** the clamping element is configured as a threaded spindle (12a) of a manually actuated quick-clamping device (12).

9. Mounting aid according to any one of the preceding claims, **characterized in that** a further adjustment element (18) is provided at one of the spacers (16) slidable on and fixable to the frame, which adjustment element comprise a wedge-shaped portion (18a) at its end for axially forcing the two flange ends (1, 2) apart.

10. Mounting aid according to any one of the preceding claims, **characterized in that** one of the holders (23) comprises a slot (24) - located parallel to the axis of the guide rod (4) - extending towards its associated end in the area of one of the two guiding elements (4), which slot is elastically deformable as a function of the forces to be accommodated by the frame, and **in that** a corresponding measuring/display element (25) is associated with this area of the holder (23).

11. Mounting aid according to claim 5, **characterized in that** the diameter in the two end portions (10a, 10b) is adapted to a clear diameter of the flange-mounting hole.

12. **A method of mounting** a flange connection of two flange ends of a pipe, including a frame, wherein
(i) two guide rods or rails (4) arranged in parallel are held at a distance by at least two spacers (5, 13; 23), at least one (13; 23) of which is slid on the guide rods and is fixed in a sliding position (13a);
(ii) wherein the frame is adjusted and clamped to a first flange end (1, 1a; 2, 2a) via an articulated rectangle (4, 9; 10);
**characterized in that**
(iii) one of the spacers (13; 23) is provided with an adjustment element (15) adjustable to the second flange end (2, 2a), and the flange end is displaced perpendicularly to its axis until it is axially aligned with the first flange end (1, 1a).

## Revendications

1. **Dispositif de montage** d'un raccord à bride d'un conduit tubulaire, comportant un cadre
(i) pourvu de deux barreaux ou rails de guidage agencés parallèlement l'un à l'autre en tant que glissières (4) maintenues écartées par au moins deux éléments écarteurs (5, 13) dont l'un au moins (13) est guidé en translation sur les glissières et est susceptible d'être arrêté (13a) dans chaque position de translation ;
(ii) le cadre étant susceptible d'être serré fermement avec une première extrémité à bride (1, 1a ; 2, 2a) et étant ajustable par rapport à celle-ci ;
**caractérisé en ce que**
(iii) l'un des éléments écarteurs comprend un élément de réglage (15) réglable vis-à-vis de la seconde extrémité à bride (2, 2a) pour déplacer cette extrémité à bride perpendiculairement à son axe jusqu'à venir en alignement axial avec la première extrémité à bride (1, 1a).

2. Dispositif d'aide au montage selon la revendication 1, **caractérisé en ce que** deux éléments de support (9) en forme de bras sont montés en pivotement sur les éléments de guidage (4) du cadre, aux extrémités desquels sont agencés des pions (10) d'un diamètre correspondant destinés à s'engager dans des perçages de fixation de bride (1b, 2b) correspondants.

3. Dispositif d'aide au montage selon la revendication 2, **caractérisé en ce que** les éléments de support (9) en forme de bras sont coudés ou recourbés l'un par rapport à l'autre.

4. Dispositif d'aide au montage selon la revendication 2, **caractérisé en ce que** des pions (10) de diamètres différents sont susceptibles d'être montés de façon interchangeable aux extrémités des éléments de support (9).

5. Dispositif d'aide au montage selon l'une des revendications 1 à 4, **caractérisé en ce que** les pions (10) prévus pour s'engager dans un perçage de fixation de bride (1b) présentent chacun un diamètre réduit dans la zone médiane (10c) de leur longueur axiale.

6. Dispositif d'aide au montage selon l'une des revendications 2 à 5, **caractérisé en ce que** des éléments de support (9) de longueurs différentes sont montés ou susceptibles d'être montés en pivotement de façon interchangeable sur les éléments de guidage (4).

7. Dispositif d'aide au montage selon la revendication 1, **caractérisé en ce que** sur l'un des éléments écarteurs (5) des deux éléments de guidage (4), il est prévu un élément de serrage (12a) agencé perpendiculairement au plan du cadre et au milieu entre les éléments de guidage (4) en vue de l'attaque et du coincement sur le conduit tubulaire (1) de l'extrémité à bride (1a) couplée au cadre par les éléments de support (9) et les pions (10).

8. Dispositif d'aide au montage selon la revendication 7, **caractérisé en ce que** l'élément de serrage est réalisé sous la forme d'une broche filetée (12a) d'un dispositif de serrage rapide (12) à actionnement manuel.

9. Dispositif d'aide au montage selon la revendication 2, **caractérisé en ce que** sur l'un des éléments écarteurs (16) susceptibles d'être déplacés en translation sur le cadre et d'être arrêtés, il est prévu un autre élément de réglage (18) qui présente à son extrémité une portion (18a) en forme de coin destinée à faire écarter axialement les deux extrémités à bride (1, 2).

10. Dispositif d'aide au montage selon l'une des revendications précédentes, **caractérisé en ce que** l'un des éléments de support (23) présente une fente (24) dans la zone de l'un des deux éléments de guidage (4) jusqu'à son extrémité associée, laquelle est parallèle à l'axe du barreau de guidage (4) et est élastiquement déformable en fonction des efforts à encaisser par le cadre, et **en ce que** cette zone de l'élément de support (23) est associée à un élément de mesure/affichage (25) correspondant.

11. Dispositif d'aide au montage selon la revendication 5, **caractérisé en ce que** dans les deux zones d'extrémité (10a, 10b) le diamètre est adapté à une largeur apparente du perçage de fixation de bride.

12. Procédé de montage d'un raccord à bride constitué de deux extrémités à bride d'un conduit tubulaire, comportant un cadre, dans lequel
(i) deux barreaux ou rails de guidage (4) agencés parallèlement l'un à l'autre sont maintenus écartés par au moins deux éléments écarteurs (5, 13; 23) dont l'un au moins (13; 23) est déplacé sur les barreaux de guidage et est arrêté (13a) dans une position de translation;
(ii) le cadre étant ajusté avec une première extrémité à bride (1, 1a; 2, 2a) par un quadrilatère articulé (4, 9; 10) et étant serré;
**caractérisé en ce que**
(iii) l'un des éléments écarteurs (13; 23) est pourvu d'un élément de réglage (15) réglable vis-à-vis de la seconde extrémité à bride (2, 2a), et l'extrémité à bride est déplacée perpendiculairement à son axe jusqu'à venir en alignement axial avec la première extrémité à bride (1, 1a).
